# EUROPEAN PATENT APPLICATION

(11) **EP 1 858 103 A2**
(43) Date of publication of application: **21.11.2007**
(21) Application number: 07009337.2
(22) Date of filing: 09.05.2007
(51) Int. Cl.: H01M 8/04, H01M 8/24

(54) **Fuel cell system with discharged water treatment facilities**

(30) Priority: 16.05.2006 CN 200610080290
(71) Applicant: Asia Pacific Fuel Cell Technologies, Chunan, 350 Maioli (TW)
(72) Inventor: Ys Yang, Jefferson, CA 92869 (US); Hsiao, Feng-Hsiang, Taipei Taiwan 110 (TW)
(74) Representative: Goddar, Heinz J.

(57) **Abstract**

A fuel folded structure cell system with discharged water treatment facilities (200) includes a fuel cell stack (2), a water collecting device (5), and a cooling water system (6). The fuel cell stack (2) discharges hydrogen and oxygen that are not reacted in the electrochemical reaction occurred in the fuel cell stack (2), and heat produced in the reaction. The water collecting device (5) contains a water absorbing material (51) for collecting reaction produced water bone on the discharged unreacted hydrogen and oxygen. The cooling water system (6) includes a heat exchanger (61); and heat dissipated from the heat exchanger (61) is blown by a fan (611) provided thereon to the water collecting device (5) to blow dry water absorbed by the water absorbing material (51).

## Description

### FIELD OF THE INVENTION

The present invention relates to a fuel cell system, and more particularly, to a fuel cell system with discharged water treatment facilities.

### BACKGROUND OF THE INVENTION

The first fuel cell is developed by William Grove in 1839. A fuel cell is a power generating unit, which produces electricity through electrochemical reaction between a fuel, such as hydrogen, methanol, etc., and an oxidant, such as oxygen. According to the type of electrolyte used, fuel cells are divided into five different types, namely, proton exchange membrane fuel cell or polymer electrolyte membrane fuel cell (PEMFC or PEM), alkaline fuel cell (AFC), phosphoric acid fuel cell (PAFC), molten carbonate fuel cell (MCFC), and solid oxide fuel cell (SOFC).

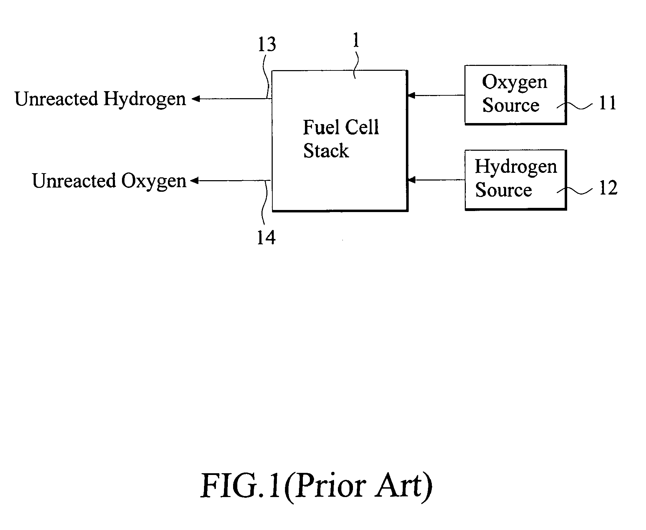

**Fig. 1** is a system block diagram of a conventional fuel cell stack **1.** As shown, oxygen and hydrogen needed by the fuel cell stack **1** are supplied from an oxygen source **11** and a hydrogen source **12,** respectively. When oxygen and hydrogen are supplied from the oxygen and hydrogen sources **11, 12** into the fuel cell stack **1,** they react in an electrochemical reaction. Hydrogen and oxygen that are not used or reacted in the reaction are discharged from the fuel cell stack **1** via an unreacted hydrogen outlet port **13** and an unreacted oxygen outlet port **14,** respectively. The unreacted hydrogen and oxygen all bear reaction produced water with them.

In response to the global environment-friendly energy development projects, some currently available fuel cell stacks have been provided with a water collector to serve as a measure for treating discharged water. The water collector effectively collects the reaction produced water carried by the unreacted gas discharged from the fuel cell stack, and prevents the reaction produced water from being arbitrarily drained.

However, drawbacks and inconveniences are found in the practical use of the conventional reaction produced water collector. For example, a user has to periodically empty the water collector, lest the collected water should overflow the water collector.

### SUMMARY OF THE INVENTION

A primary object of the present invention is to provide a water-cooled fuel cell system with water collecting device. To achieve this object, the fuel cell system of the present invention includes a cooling water system that utilizes reaction produced water to transfer and dissipate heat produced during hydrogen/oxygen reaction in the fuel cell system.

Another object of the present invention is to provide a water collecting device for fuel cell system that enables good vaporization of reaction produced water collected therein. To achieve this object, the water collecting device for fuel cell system according to the present invention contains a water absorbing material therein to absorb water produced during hydrogen/oxygen reaction in a fuel cell stack, and allows the absorbed water to vaporize quickly.

A further object of the present invention is to provide an air cooling fuel cell system with water collecting device. To achieve this object, the fuel cell system of the present invention includes a fan that blows hot air produced during hydrogen/oxygen reaction in a fuel cell stack to a water absorbing material contained in the water collecting device, so as to blow dry the produced water absorbed by the water absorbing material.

To fulfill the above objects, a fuel cell system with discharged water treatment facilities is provided. The fuel cell system comprises a fuel cell stack, a water collecting device, and a cooling water system. The fuel cell stack discharges hydrogen and oxygen that are not reacted in the electrochemical reaction occurred in the fuel cell stack, and heat produced in the reaction. The water collecting device contains a water absorbing material for collecting reaction produced water carried by the discharged unreacted hydrogen and oxygen. The cooling water system includes a heat exchanger; and heat dissipated from the heat exchanger is blown by a fan provided thereon to the water collecting device to blow dry water absorbed by the water absorbing material.

In the present invention, water produced reaction and carried by the unreacted gas discharged from the fuel cell stack is absorbed by the water absorbing material contained in the water collecting device, and heat produced by the fuel cell stack is transferred to and dissipated from a heat exchanger and then blown toward the water collecting device to blow dry the reaction produced water absorbed by the water absorbing material. With these arrangements, water collected in the water collecting device is automatically blown dry, and a user need not to empty the collected water now and then. Therefore, the fuel cell system with water collecting device according to the present invention has increased industrial value.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

**Fig. 1** is a system block diagram of a conventional fuel cell stack;

**Fig. 2** is a system block diagram of a fuel cell system with discharged water treatment facilities according to a first preferred embodiment of the present invention;

**Fig. 3** is a system block diagram of a fuel cell system with discharged water treatment facilities according to a second embodiment of the present invention; and

**Fig. 4** is a perspective view of a fuel cell system with discharged water treatment facilities according to a third embodiment of the present invention.

### DETAILED DESCRIPTION OF THE PREFERRED EMBODIMENTS

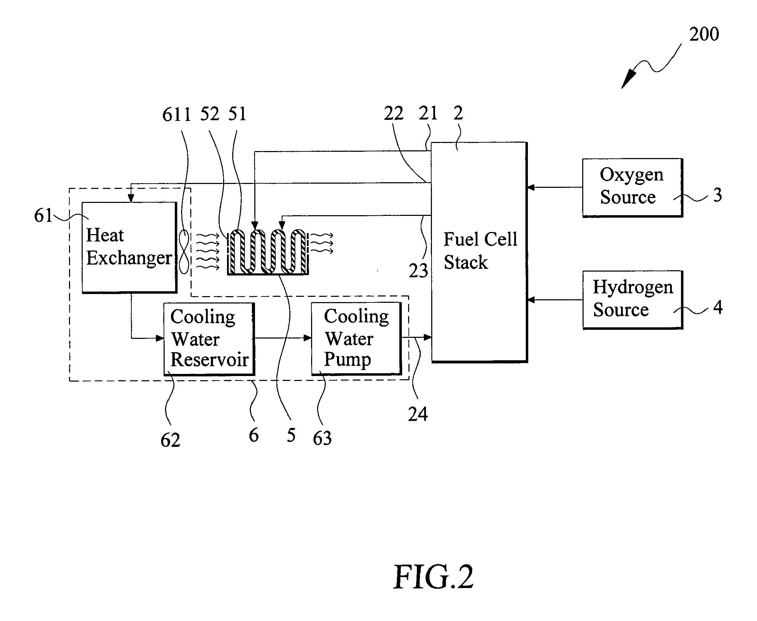

Please refer to **Fig. 2** that is a system block diagram of a fuel cell system with discharged water treatment facilities **200** according to a first preferred embodiment of the present invention. As shown, the fuel cell system **200** includes a fuel cell stack **2,** an oxygen source **3,** a hydrogen source **4,** a water collecting device **5,** and a cooling water system **6.**

The fuel cell stack **2** includes an unreacted hydrogen outlet port **21,** a cooling water outlet **22,** an unreacted oxygen outlet port **23,** and a cooling water inlet **24.** Oxygen and hydrogen are supplied from the oxygen source **3** and the hydrogen source **4,** respectively, into the fuel cell stack **2,** and an electrochemical reaction occurs between the hydrogen and the oxygen in the fuel cell stack **2** to generate electricity and produce heat. The unreacted hydrogen and oxygen all bear reaction produced water thereon. The unreacted and water-bearing hydrogen and oxygen are discharged from the fuel cell stack **2** via the unreacted hydrogen outlet port **21** and the unreacted oxygen outlet port **23,** respectively.

The water collecting device **5** is connected to the unreacted hydrogen outlet port **21** and the unreacted oxygen outlet port **23** of the fuel cell stack **2** via pipelines, and defines an inner space for containing a water absorbing material **51** therein, so as to absorb the produced water carried by the unreacted hydrogen and oxygen discharged from the fuel cell stack **2** via the unreacted hydrogen outlet port **21** and the unreacted oxygen outlet port **23.** The water collecting device **5** is also provided on side walls thereof with a plurality of air vents **52.** The water absorbing material **51** in the water collecting device **5** may be generally known sponge or other suitable materials. The water absorbing material **51** is of a folded structure providing an increased water vaporizing area to enable quick vaporization of the reaction produced water absorbed by the water absorbing material **51.** Depending on different application fields of the fuel cell stack **2,** the folded structure of the water absorbing material **51** may be differently shaped to, for example, a corrugated structure, a zigzag fold structure, or a finned structure.

The cooling water system **6** includes a heat exchanger **61,** a cooling water reservoir **62,** and a cooling water pump **63.** The heat exchanger **61** is connected to the cooling water outlet **22** of the fuel cell stack **2** via a pipeline for treating cooling water discharged from the fuel cell stack **1,** so that heat produced by the fuel cell stack **2** is transferred to and dissipated from the heat exchanger **61.** The heat exchanger **61** is externally provided at a position corresponding to the water collecting device **5** with a fan **611** for blowing the heat dissipated from the heat exchanger **61** through the air vents **52** into the water absorbing material **51** in the water collecting device **5,** so that reaction produced water absorbed by the water absorbing material **51** is quickly blown dry.

The cooling water reservoir **62** stores the cooling water that has been treated at the heat exchanger **61.** The cooling water stored in the cooling water reservoir **62** is then pumped by the cooling water pump **63** to flow through the cooling water inlet **24** into the fuel cell stack **2.**

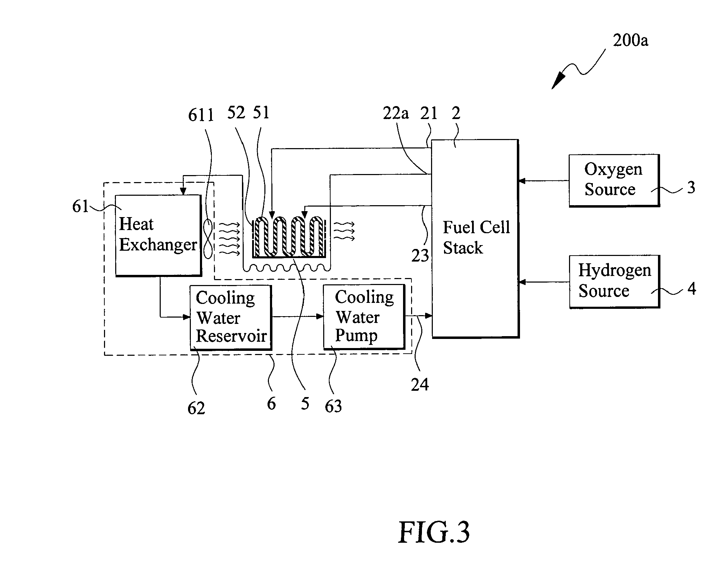

**Fig. 3** is a system block diagram of a fuel cell system with discharged water treatment facilities **200a** according to a second embodiment of the present invention. As shown, the fuel cell system **200a** is generally structurally similar to the first preferred embodiment **200,** except that the pipeline extended between a cooling water outlet **22a** of the fuel cell stack **2** and the heat exchanger **61** of the cooling water system **6** is passed through the water collecting device **5** by, for example, winding around or closely bearing against the water collecting device **5.** With this arrangement, heat contained in the cooling water discharged via the cooling water outlet **22a** is utilized to increase the vaporization rate of the reaction produced water absorbed by the water absorbing material **51** in the water collecting device **5.**

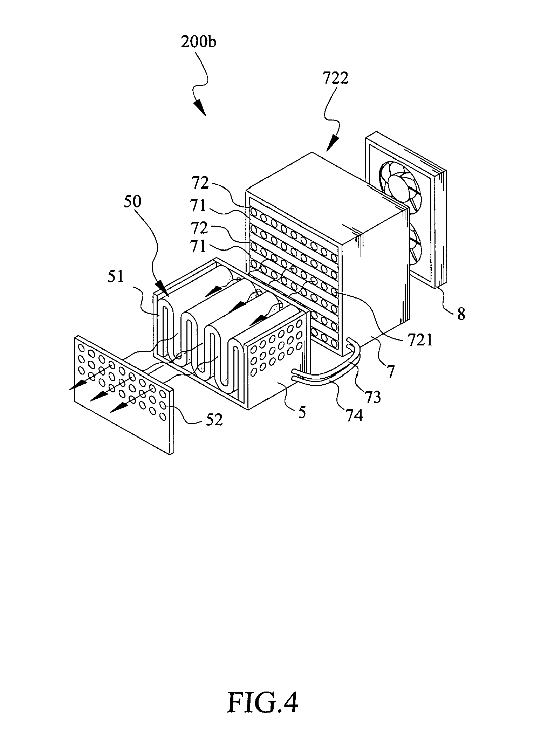

**Fig. 4** is a perspective view of a fuel cell system with discharged water treatment facilities **200b** according to a third embodiment of the present invention. As shown, the fuel cell system **200b** includes a water collecting device **5,** a fuel cell stack **7,** and a fan **8.**

The fuel cell stack **7** includes a plurality of fuel cell units **71,** a plurality of cooling plates **72,** an unreacted hydrogen outlet port **73,** and an unreacted oxygen outlet port **74.** Electrochemical reaction occurs between the hydrogen and the oxygen in the fuel cell units **71** of the fuel cell stack **7** to generate electricity and produce heat, and unreacted hydrogen and oxygen. The unreacted hydrogen and oxygen all bear reaction produced water thereon. The unreacted and water-bearing hydrogen and oxygen are discharged from the fuel cell stack **7** via the unreacted hydrogen outlet port **73** and the unreacted oxygen outlet port **74,** respectively. The cooling plates **72** are provided with a plurality of parallelly arranged air passages.

The water collecting device **5** is arranged near an air outlet end **721** of the air passages of the fuel cell stack **7,** and is connected to the unreacted hydrogen outlet port **73** and the unreacted oxygen outlet port **74** via pipelines. The water collecting device **5** defines an inner space **50** for holding a water absorbing material **51** therein to absorb reaction produced water carried by the unreacted hydrogen and oxygen discharged from the fuel cell stack **7** via the unreacted hydrogen outlet port **73** and the unreacted oxygen outlet port **74.** The water collecting device **5** is also provided on side walls with a plurality of air vents **52.**

The water absorbing material **51** is of a folded structure. Depending on the application fields of the fuel cell stack **7,** the folded structure of the water absorbing material **51** may be differently shaped to, for example, a corrugated structure, a zigzag fold structure, or a finned structure. Moreover, the water absorbing material **51** may be generally known sponge or other suitable materials.

The fan **8** is arranged near an air inlet end **722** of the air passages of the fuel cell stack **7** to supply airflow to the air passages, so that hot air produced during the electrochemical reaction in the fuel cell stack **7** is sent out of the fuel cell stack **7** from the air outlet end **721** of the air passage and blown toward the water collecting device **5** to blow dry the reaction produced water absorbed by the water absorbing material **51.**

In the illustrated embodiments of the present invention, a water collecting device containing a water absorbing material is provided to collect reaction produced water discharged from the fuel cell stack, and a fan is provided to blow heat produced during the hydrogen/oxygen reaction in the fuel cell stack toward the water absorbing material in the water collecting device, so as to blow dry the reaction produced water absorbed by the water absorbing material. With these arrangements, water collected in the water collecting device is automatically blown dry without the need of emptying the collected water now and then.

In the illustrated embodiments of the present invention, the oxygen source and the hydrogen source are provided mainly to supply oxygen and hydrogen needed by the fuel cell stack. Any other known types of oxygen and hydrogen sources providing equivalent function and effect may also be employed in the present invention. For example, the oxygen source may be ambient air and a cooperative blower, or a high-pressure oxygen cylinder or tank; and the hydrogen source may be a high-pressure hydrogen cylinder or tank, or a hydrogen storage alloy.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A fuel cell system, comprising:
a fuel cell stack, which comprises an unreacted oxygen outlet port, an unreacted hydrogen outlet port, a cooling water outlet, and a cooling water inlet;
an oxygen source;
a hydrogen source;
a cooling water system, which comprises a heat exchanger located between and connected to the cooling water outlet and inlet of the fuel cell stack via a pipeline; and
a water collecting device connected to the unreacted oxygen outlet port and the unreacted hydrogen outlet port of the fuel cell stack for collecting reaction produced water carried by the unreacted gas discharged from the fuel cell stack via the unreacted oxygen outlet port and the unreacted hydrogen outlet port;
wherein the heat exchanger of the cooling water system is externally provided at a position corresponding to the water collecting device with a fan, so that heat produced by the fuel cell stack transferred to and dissipated from the heat exchanger is blown by the fan toward the water collecting device.

2. The fuel cell system as claimed in claim 1, wherein the unreacted gas is an unreacted oxygen discharged from the unreacted oxygen outlet port of the fuel cell stack.

3. The fuel cell system as claimed in claim 1, wherein the unreacted gas is an unreacted hydrogen discharged from the unreacted hydrogen outlet port of the fuel cell stack.

4. The fuel cell system as claimed in claim 1, wherein the water collecting device has a water absorbing material contained therein for absorbing the reaction produced water collected in the water collecting device.

5. The fuel cell system as claimed in claim 4, wherein the water absorbing material contained in the water collecting device is of a folded structure.

6. The fuel cell system as claimed in claim 1, wherein the water collecting device is provided on a side wall thereof with a plurality of air vents.

7. The fuel cell system as claimed in claim 1, wherein the cooling water system further includes a cooling water reservoir connected to the heat exchanger for storing cooling water having been treated at the heat exchanger; and a cooling water pump for pumping out the cooling water stored in the cooling water reservoir, so that the cooling water flows into the fuel cell stack via the cooling water inlet.

8. The fuel cell system as claimed in claim 1, wherein the pipeline extended from the cooling water outlet of the fuel cell stack is wound around the water collecting device before being extended and connected to the heat exchanger.

9. A fuel cell system, comprising:
a fuel cell stack having an unreacted oxygen outlet port, an unreacted hydrogen outlet port, a cooling water outlet, and a cooling water inlet;
an oxygen source;
a hydrogen source;
a cooling water system having a heat exchanger located between and connected to the cooling water outlet and inlet of the fuel cell stack via a pipeline; and
a water collecting device connected to the unreacted oxygen outlet port and the unreacted hydrogen outlet port of the fuel cell stack for collecting reaction produced water carried by the unreacted gas discharged from the fuel cell stack via the unreacted oxygen outlet port and the unreacted hydrogen outlet port;
wherein the water collecting device has a water absorbing material contained therein for absorbing the reaction produced water collected in the water collecting device.

10. The fuel cell system as claimed in claim 9, wherein the unreacted gas is an unreacted oxygen discharged from the unreacted oxygen outlet port of the fuel cell stack.

11. The fuel cell system as claimed in claim 9, wherein the unreacted gas is an unreacted hydrogen discharged from the unreacted hydrogen outlet port of the fuel cell stack.

12. The fuel cell system as claimed in claim 9, wherein the water absorbing material contained in the water collecting device is of a folded structure.

13. The fuel cell system as claimed in claim 9, wherein the water collecting device is provided on side walls with a plurality of air vents.

14. The fuel cell system as claimed in claim 9, wherein the cooling water system further includes a cooling water reservoir connected to the heat exchanger for storing cooling water having been treated at the heat exchanger; and a cooling water pump for pumping out low-temperature cooling water stored in the cooling water reservoir, so that the low-temperature cooling water flows into the fuel cell stack via the cooling water inlet.

15. The fuel cell system as claimed in claim 14, wherein the pipeline extended from the cooling water outlet of the fuel cell stack is wound around the water collecting device before being extended and connected to the heat exchanger.

16. A fuel cell system, comprising:
a fuel cell stack, which comprises at least one fuel cell unit and at least one cooling plate having a plurality of parallelly arranged air passages arranged thereon, and which has an unreacted oxygen outlet port and an unreacted hydrogen outlet port;
an oxygen source;
a hydrogen source;
a water collecting device arranged near an air outlet end of the air passages of the fuel cell stack, and connected to the unreacted oxygen outlet port and the unreacted hydrogen outlet port of the fuel cell stack via pipelines for collecting reaction produced water carried by the unreacted gas discharged from the fuel cell stack via the unreacted oxygen outlet port and the unreacted hydrogen outlet port; and
a fan arranged near an air inlet end of the air passages of the fuel cell stack for supplying airflow to the air passages, so that hot air produced by and sent out of the fuel cell stack from the air outlet end of the air passages is blown toward the water collecting device.

17. The fuel cell system as claimed in claim 16, wherein the unreacted gas is an unreacted oxygen discharged from the unreacted oxygen outlet port of the fuel cell stack.

18. The fuel cell system as claimed in claim 16, wherein the unreacted gas is an unreacted hydrogen discharged from the unreacted hydrogen outlet port of the fuel cell stack.

19. The fuel cell system as claimed in claim 16, wherein the water collecting device has a water absorbing material contained therein for absorbing the reaction produced water collected in the water collecting device.

20. The fuel cell system as claimed in claim 19, wherein the water absorbing material contained in the water collecting device is of a folded structure.

21. The fuel cell system as claimed in claim 16, wherein the water collecting device is provided on a side wall threrof with a plurality of air vents.
